# EUROPEAN PATENT SPECIFICATION

(11) **EP 0 299 678 B1**
(45) Date of publication and mention of the grant of the patent: **15.09.1993**
(21) Application number: 88306202.8
(22) Date of filing: 07.07.1988
(51) Int. Cl.: C08F 38/00

(54) **Method for producing superlong conjugated polymer**
Verfahren zur Herstellung eines superlangen konjugierten Polymers
Procédé de préparation d'un polymère conjugué super-long

(30) Priority: 15.07.1987 JP 176180/87
(43) Date of publication of application: 18.01.1989
(73) Proprietor: MATSUSHITA ELECTRIC INDUSTRIAL CO., LTD., Kadoma-shi, Osaka-fu, 571 (JP)
(72) Inventor: Ogawa, Kazufumi, Hirakata Osaka 573 (JP); Tamura, Hideharu, Katano Osaka 576 (JP)
(74) Representative: Spencer, Graham Easdale

(56) References cited:
- Journal of Polymer Science: Polymer Letters Edition, vol 16, 1978, John Wiley & D Day et al. 'Polymerization of diacetylene carbonic acid monolayers at the gas water interface', pages 205-210
- Journal of Macromolecular Science-Chemistry, vol A15, no 5, 1981, Marcel Dekker inc, New York, H H Hub et al. 'Polymerization of lipid and lysolipid like diacetylenes in monolayersand liposomes' pages 701-715
- Journal of the American Chemical Society, vol 104, no 1, 1982, American Chemical Society, Washington DC, E Lopez et al. 'Structural effects on the photopolymerization of bilayer membranes', pages 305.307

## Description

This invention relates to a method of producing superlong conjugated polymer. Methods for the polymerisation of diacetylene compounds are known and are described in the Journal of polymer sciences Polymer Letters Edition vol 16, 1978 John Wiley and Sons inc., New YORK, D. DAY et al. "Polymerisation of diacetylene carbonic acid mono-layers at the gas water interface" pages 205-210. It is known to polymerise a diacetylene derivative in the solid phase to form a single principal chain product having a π-electron conjugated bond, which product is a polymer of polydiacetylene. Since this polymer possesses electrical conductivity and nonlinear optical properties, it has been widely studied as a material useful for optical and electronic purposes.

When a diacetylene derivative possessing both hydrophobic and hydrophilic groups is polymerised, a monomolecular film can be formed on a water surface, so that a build-up film may be fabricated by the Langmuir-Blodgett (LB) method. The LB method is an important technique in the development of molecular devices having the functions in the molecule itself. According to the LB method, a monomolecular film in the order of tens of angstroms can be produced, and its build-up film may be obtained easily (one angstrom is 10⁻¹⁰m).

Much work has been done on the polymerization process of LB film using diacetylene derivatives. Recently, it has been found that the photoreactivity of diacetylene derivatives is largely dependent on the arrangement of the diacetylene group. Since the role of side chain group is important for molecular arrangement, photoreactivity has been specifically studied on diacetylene derivatives with various side chain groups.

On the other hand, on many polydiacetylene derivative LB films, since the color is changed dramatically from blue to red due to heat, pressure or ultraviolet rays, research has also been focussed on the phase change.

Despite this, there is still much unknown about the photoreactivity of diacetylene derivative LB film. Further, nothing has been studied about the relation between molecular density or molecular arrangement and the photoreactivity in the state of monomolecular film. Also, straight-chain polydiacetylene of superhigh molecular weight, having continuous conjugated bonds, has not been made.

We have worked on a monomolecular film formed on a water surface, i.e. a Langmuir (L) film, and have developed a technique capable of optically measuring ultraviolet spectra and others at real time while the π-A curve is monitored. We have closely examined the relation between photoreactivity to ultraviolet irradiation of a diacetylene derivative L film, and the molecular density or molecular arrangement, and have also studied the photoreactivity of diacetylene L film built-up at a typical molecular concentration. From this work, we have discovered that photopolymerization of LB film or crystals of diacetylene derivatives can produce a compound of only small molecular weight because the molecular area is significantly contracted at the time of polymerization. In other words, if the diacetylene derivative is photopolymerized as an LB film or as crystals, we have found that it is impossible to produce a straight-chain diacetylene organic polymer having a continuous conjugated bond, with a superhigh molecular weight and excellent conductivity.

However, as a result of further work, we have now succeeded in producing polydiacetylene with a continuous conjugated bond, the polymer being straight chain and of superhigh molecular weight (i.e. a superlong conjugated polymer). We have furthermore discovered that a polydiacetylene of much longer conjugated bond can be obtained when a direct-current bias is applied in the direction of the water surface at the time of the photopolymerization.

According to the present invention, there is provided a method of producing superlong conjugated polymer comprising the steps of:
spreading on an aqueous subphase a solution in an organic solvent of a substance having a diacetylene group, and evaporating said organic solvent;
gathering molecules of the substance having said diacetylene group remaining on the aqueous subphase by moving a barrier in a direction parallel to the surface of the aqueous subphase; and
polymerizing by light irradiation under a specified constant surface pressure.

Preferably, before the irradiation, under a specified surface pressure, a direct-current electric field is applied in a direction parallel to the water surface, and then the light irradiation is carried out to polymerize the monomolecular film. An inorganic salt may be included in the water.

By photopolymerizing while applying a surface pressure on the L-film of the diacetylene derivative spread on the water surface, contraction of the molecular area at the time of photopolymerization is compensated, so that a polydiacetylene of superhigh molecular weight having a continuous conjugated bond and being straight chain can be produced. In other words, by compressing the diacetylene molecules arranged in a monomolecular state always with a constant pressure, gaps produced in molecular contraction at the time of photopolymerization are filled up to keep the condition in which the photopolymerization reaction of diacetylene monomer goes continuously, so that a polydiacetylene of superhigh molecular weight having continuous conjugated bond and straight chain can be obtained. Moreover, by gathering the diacetylene derivative molecules on the water surface in the surface direction and, optionally, by applying direct-current bias in the surface direction at the time of photopolymerization, the arrangement of the monomers is improved, and a polydiacetylene having a longer conjugated bond is realized.

By the method of this invention, a polydiacetylene polymer having excellent conductivity can be prepared at a high efficiency. According to this method, theoretically, it is possible to prepare polydiacetylene of superhigh molecular weight having a straight chain and a continuous length of conjugated bond of tens of centimetres or even several meters. By optimizing the type of the diacetylene derivative monomer or manufacturing conditions, it may also be possible to produce organic superconductor without cooling by employing this method.

In order that the invention may be more fully understood, reference is made to the accompanying drawings, wherein:
Fig. 1 is a conceptual drawing of a multichannel photometric system for evaluation of L film, used in the experiment of this invention;
Fig. 2 is a conceptual drawing of an optical path near the L film sample;
Fig. 3 is a diagram showing π-A curve variation of typical PDA-L film;
Fig. 4 is a diagram showing π-A curve variation due to light irradiation of PDA-L film on the surface of high salt concentration water;
Fig. 5 is a diagram showing π-A curve variation due to light irradiation of PDA-L film on the surface of low salt concentration water;
Fig. 6 is a diagram showing π-A curve variation due to light irradiation of PDA-L film on the surface of pure water;
Fig. 7 is a diagram showing surface pressure variation due to light irradiation of PDA-L film on the surface of high salt concentration water;
Fig. 8 is a diagram showing surface pressure variation due to light irradiation of PDA-L film on the surface of low salt concentration water;
Fig. 9 is a diagram showing surface pressure variation due to light irradiation of PDA-L film on the surface of pure water;
Fig. 10 is a diagram showing absorption spectrum variation due to UV irradiation of low concentration PDA-L film;
Fig. 11 is a diagram showing absorption spectrum variation due to UV irradiation of low concentration PDA-L film;
Fig. 12 is a diagram showing absorption spectrum variation due to UV irradiation of high concentration PDA-L film;
Fig. 13 is a diagram showing absorption spectrum variation due to UV irradiation of high concentration PDA-L film;
Fig. 14, parts (a) and (b) are diagrams showing changes in the surface pressure and absorption strength due to barrier movement of the PDA-L film on the surface of high salt concentration water [part (a) showing surface pressure variation due to barrier movement, and part (b) showing absorption strength variation at 242 nm due to barrier movement] ;
Fig. 15, parts (a) and (b) are diagrams showing changes in the surface pressure and absorption strength due to barrier movement of the PDA-L film on the surface of low salt concentration water [part (a) showing surface pressure variation due to barrier movement, part (b) showing absorption strength variation at 242 nm due to barrier movement];
Fig. 16 is a diagram showing absorption spectrum variation due to UV irradiation of low concentration PDA-LB film;
Fig. 17 is a diagram showing absorption spectrum variation due to UV irradiation of high concentration PDA-LB film;
Fig. 18 is a diagram showing residual film rate variation due to ultraviolet ray irradiation of low concentration PDA-LB film;
Fig. 19A to Fig. 19C are explanatory diagrams showing arrangement models of PDA-L film free from photoreaction; and
Fig. 20A, B are diagrams showing photoreaction process of low conentration PDA-L film [Fig. 20A showing the ultraviolet ray polymerization process of PDA-L film, and Fig. 20B showing the ultraviolet ray decomposition process of poly-PDA-L film.

### Detailed Description of the Invention

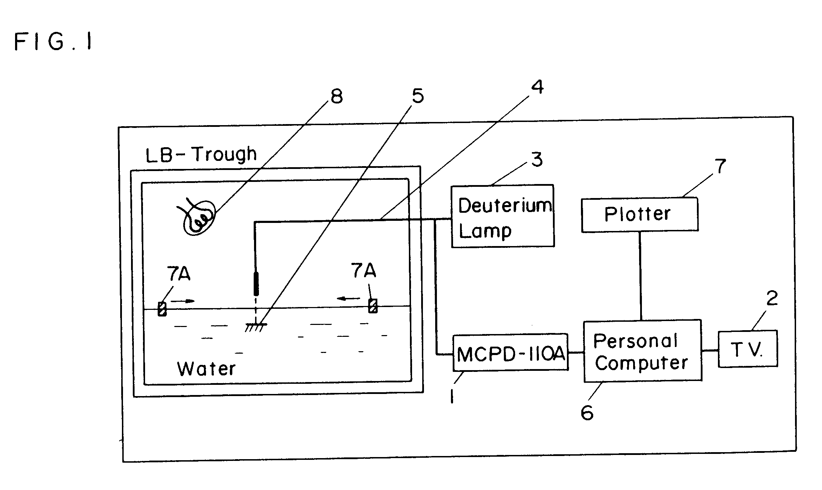

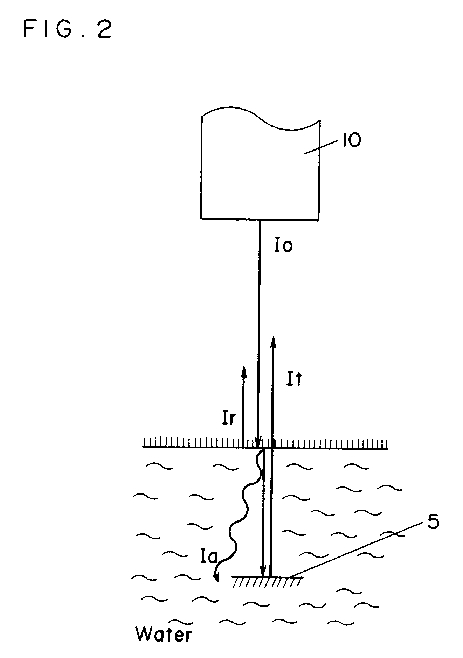

First, the result of the experiment conducted as the preliminary step of invention is discussed. The sample used in this experiment is pentacosa diinoic acid (CH₃(CH₂)₁₁ - C ≡ C - C ≡ C - (CH₂)₈COOH; PDA) which is a diacetylene derivative. To begin with, in order to check the photoreactivity of PDA, the following experiment was conducted. For the evaluation of photoreactivity of L film and building-up LB film, "Joyce Label Trough IV (Fig. 1 )" was used, and the experiment was conducted in a clean room of class 100 under yellow light, cutting off the light of 500 nm or less. At this time, the clean room was controlled with the temperature at 23±1°C and humidity at 40±5%. An LB film of 25 layers was built-up, and as the building-up progressed, the build-up type was changed from Z deposition to Y deposition from around the tenth layer. The substrate used in building-up of LB film was a Si substrate deposited as an oxide film of 3 inches (7.6cm) in diameter before use. The light source used in photoreaction and spectrum measurement is a deuterium lamp of 200 W, which is cooled in water in order to maintain stability. The intensity of illumination was always controlled at 0.05 mW/cm². For measurement of photoreactivity on the L film, a new direct photometric system was developed by using a multichannel spectrophotometer 1 as shown in Fig. 1 (multichannel spectrophotometer MCPD-110A; Otsuka Electronics Co., Ltd.), by referring to a report by H. Gruninger et al. in J. Chem. Phys. 79(8), 3701-3710, 15 Oct. 1983. A main feature of this system is that the spectrum or light absorption intensity can be measured with realtime while monitoring the π-A curve of L-film by monitor TV 2. The UV light obtained from the deuterium lamp 3 is introduced from one end of a Y-shaped light guide (e.g., optical fiber) 4, and the light reflected and returning from a mirror 5 in the water is measured by the multichannel spectrophotometer 1, and is processed in a personal computer 6, and delivered through a plotter 7. Fig. 2 is a conceptual diagram of optical path near the L film. As shown in Fig. 2, the input light (Io) leaving the end 10 of optical fiber as the light guide 4 is divided into three sections at the interface the L film and water surface, i.e., the light (Ia) absorbed by the monomolecular film, the light (Ir) reflected by the interface, and the light (It) transmitting through the interface and reflected by the A1 mirror and returning. Actually, therefore, the light of Ir + It is measured, and by calculating the difference of Io and Ir + It at each wavelength, the absorption spectrum of L film can be measured. Meanwhile, the L film on the water surface is designed to be compressed and pressurized in the direction of water surface by means of barrier 7A. An ultraviolet light lamp 8 is for photopolymerization of L film.

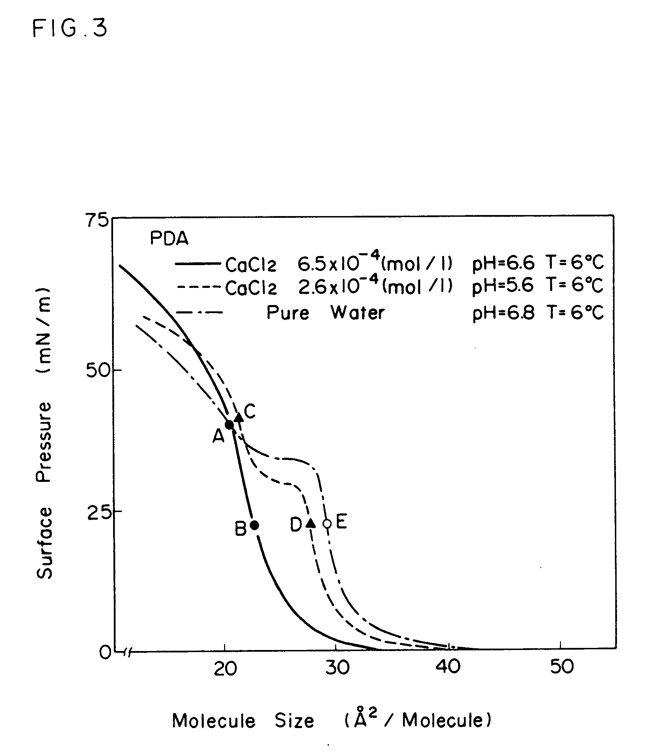

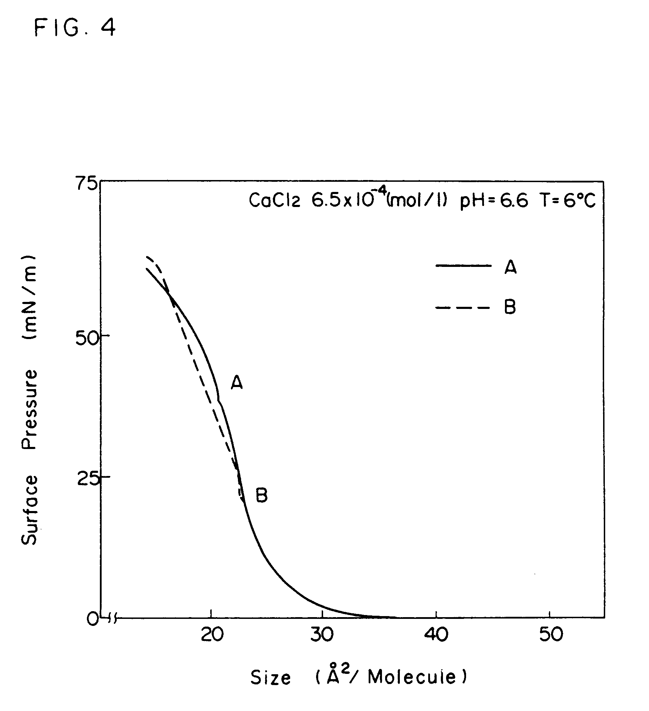

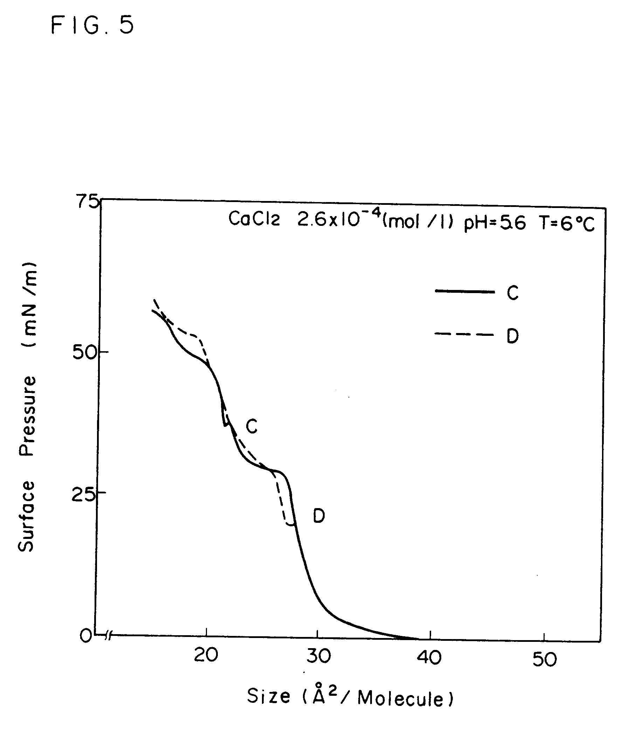

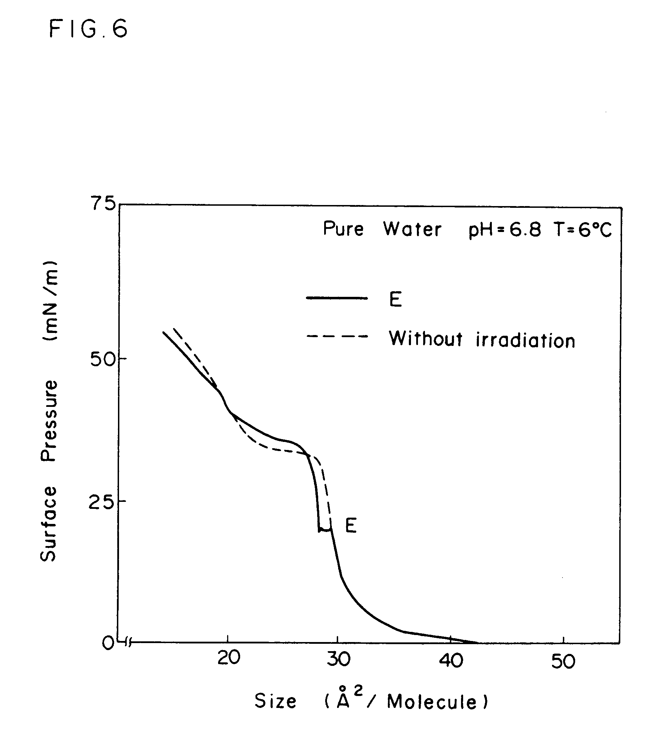

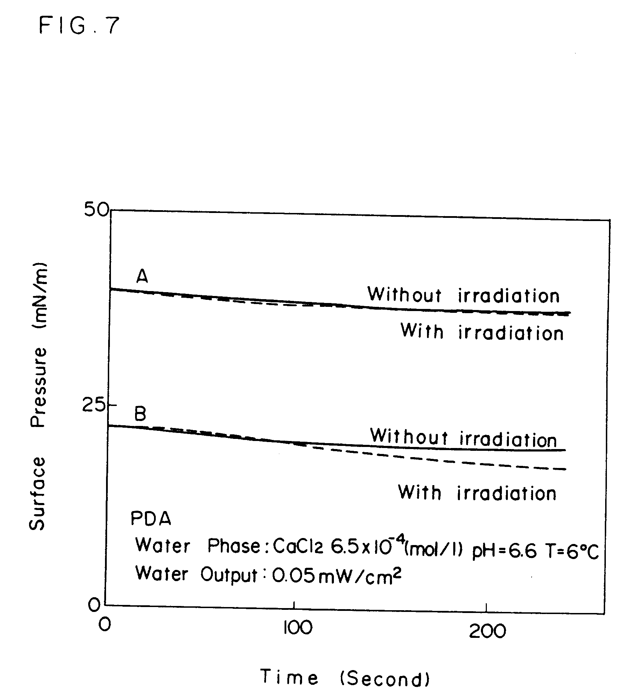

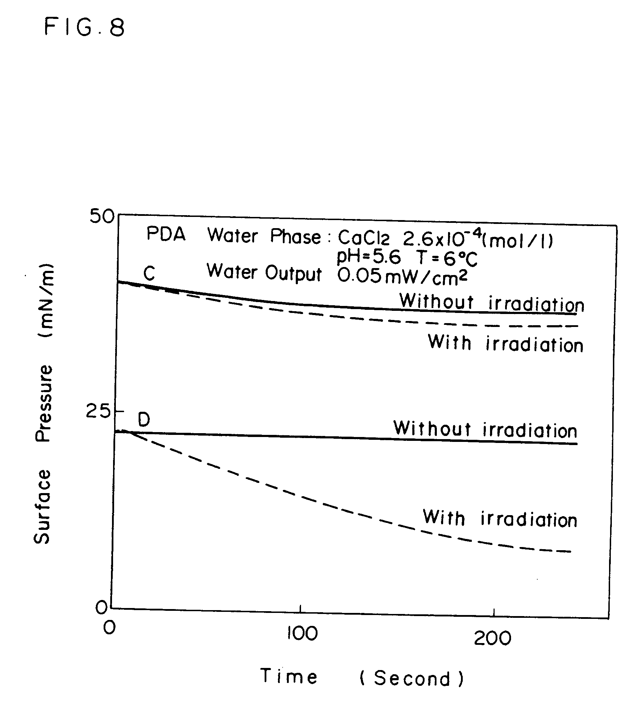

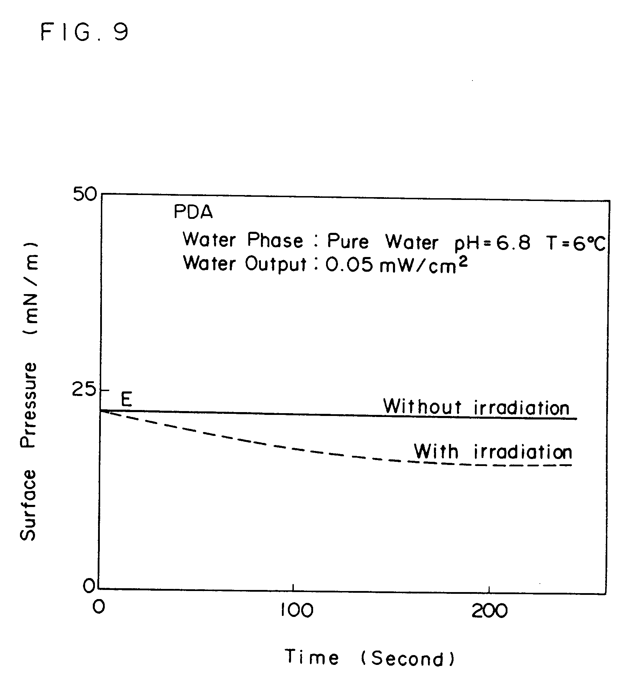

In order to find the effect of the difference in the molecular density and molecular arrangement on the photoreactivity of PDA-L film, the π-A curve of L film was measured by varying the salt concentration and pH of the aqueous subphase. Three typical π-A curves are shown in Fig. 3. Changes of π-A curves when the PDA-L films in individual typical conditions (indicated by dots A, B, C, D, E in Fig. 3) were irradiated with ultraviolet light all over the surface for 5 minutes, which are shown in Figs. 4, 5, and 6. In Figs. 4 and 5, two π-A curves irradiated with ultraviolet light at points A and B, and points C and D are overlapped each other. In Fig. 6, the π-A curve irradiated with ultraviolet ray at point E and the π-A curve without irradiation are overlapped. As shown in Figs. 5 and 6, in the low concentration PDA-L film, the molecule area was significantly decreased by photopolymerization. Accordingly, in order to further clarify that the molecule size is decreased by photopolymerization, in individual conditions (indicated by dots A, B, C, D, E in Fig. 3), the barrier for compressing the PDA-L film was fixed, and all surface was irradiated with ultraviolet light. The changes of the surface pressure at this time are shown in Figs. 7, 8, and 9. As shown in Figs. 7 and 8, a great difference was recognized in the photoreactivity between the high concentration PDA-L film (point A) and low concentration PDA-L film (point D). Meanwhile, between point D in Fig. 8 and point E in Fig. 9, a great difference was recognized in the change of surface pressure, but at point D in Fig. 5 and point E in Fig. 6 a similar contraction of molecule area was observed. This differerence seems to come from the reason that the PDA-L film was destroyed in the photopolymerization process because the aqueous subphase condition of PDA-L film in Fig. 6 is pure water.

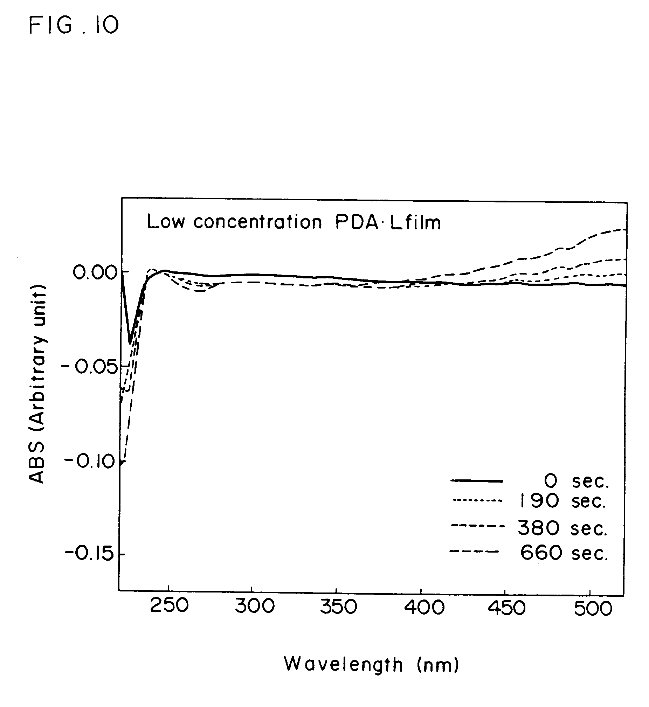

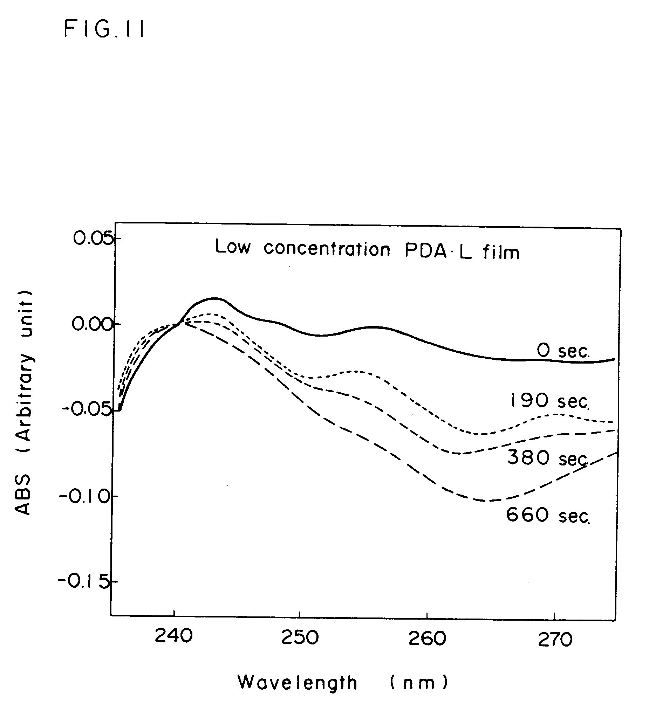

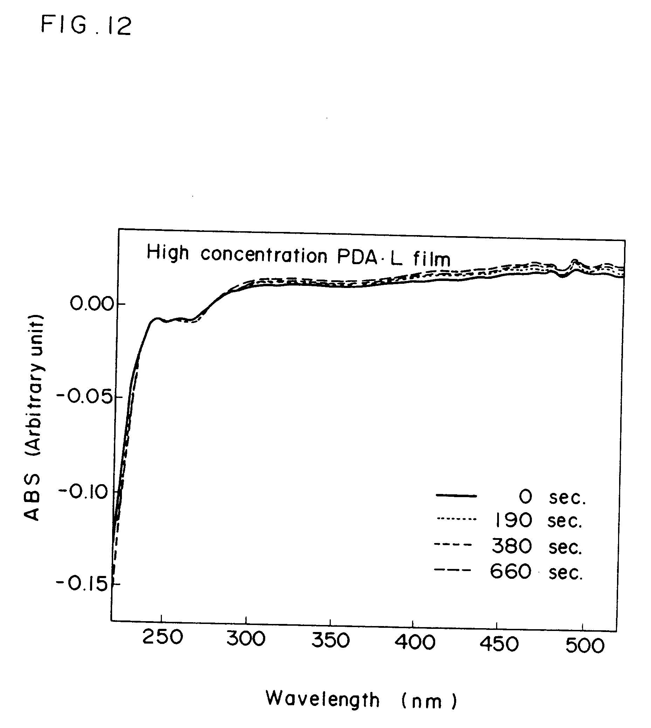

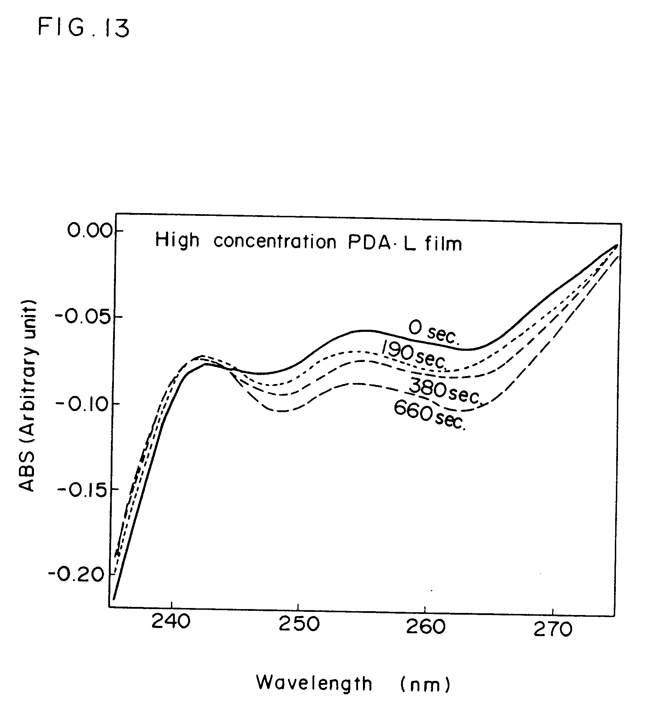

Furthermore, at two typical points (A, D), spectrum changes of PDA-L film due to ultraviolet irradiation are shown in Figs. 10, 11, 12, and 13. These spectra show the changes in the absorption spectra due to photoreaction of the monomolecular film on the water surface. Figs. 11 and 13 are partially magnified views of Figs. 10 and 12, and in both diagrams, absorption peaks are noted at 242 and 255 nm. As shown in Fig. 11, in the low density PDA-L film, two absorption peaks are extinguished along with the ultraviolet irradiation. These absorptions, meanwhile, coincide very well with the action spectrum reported by B. Tieke et al. in Chemistry Edition, vol. 17, 1631-1644, 1979. By contrast, in the high density PDA-L film as shown in Fig. 13, even in the same irradiation condition, there is almost no change in the absorption band peak. The difference in the photopolymerization in these two PDA-L films can be further confirmed in Figs. 10 and 12. That is, in the low density PDA-L film (Fig. 10), a new absorption appears at 400 nm or over along with ultraviolet irradiation, but it is not recognized at all in the high density PDA-L film. Generally, absorption of visible light region of 400 nm or over is said to be absorption of polydiacetylene or polybutatriene, but in the high density L film this absorption is not observed at all when irradiating with ultraviolet light. Therefore, it is estimated that polymerization of PDA-L film is not generated at all. It is obvious from the π-A curve shown in Fig. 3 that the cause of such difference in the photoreactivity consists in the difference in the molecular density or molecular arrangement on each surface pressure. In other words, if the arrangement of molecules of the PDA-L film is different, the same ultraviolet irradiation condition may not always contribute to the photopolymerization reaction of the PDA-L film.

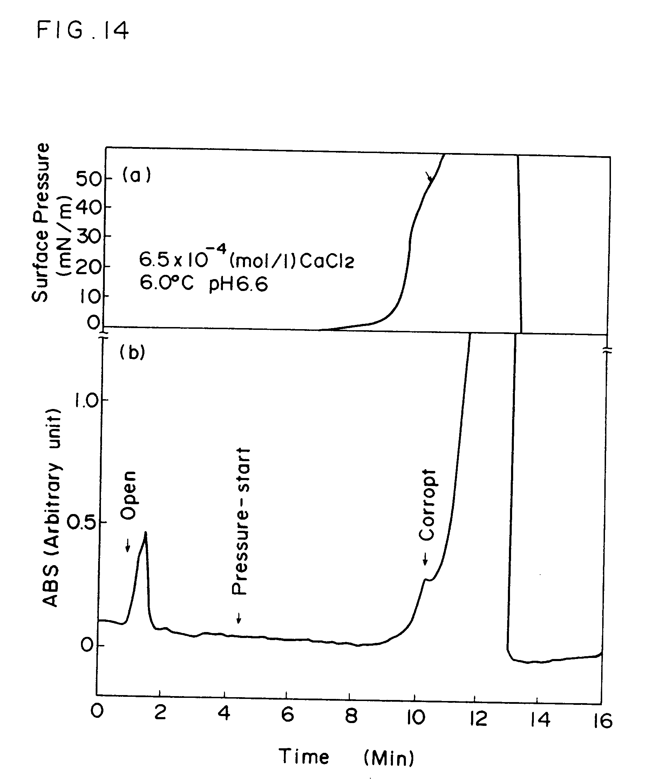

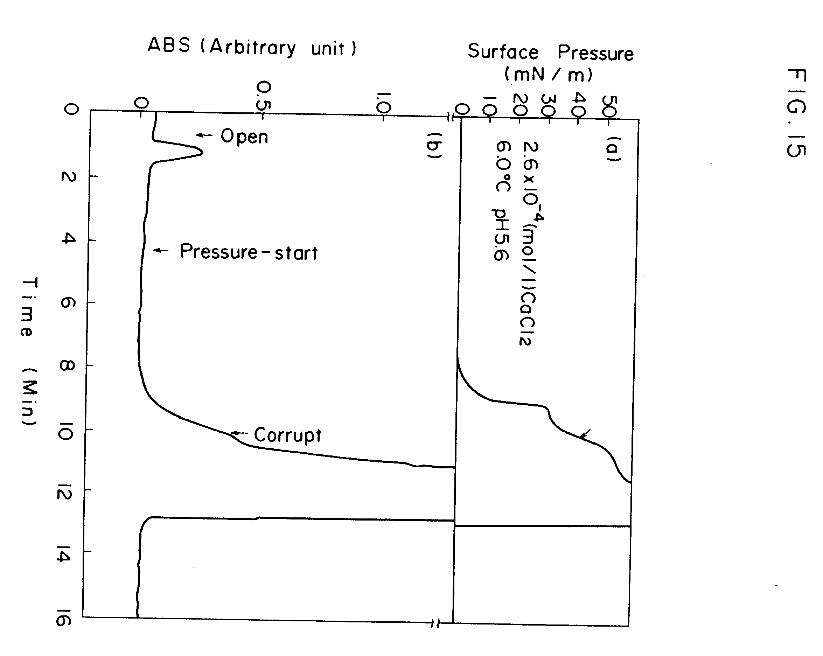

On the other hand, as shown in Figs. 3, 7, and 8, even in the same high density state, a slight difference in the photoreactivity was recognized between point A and C. Accordingly, in order to clearly distinguish the phase condition of the L film, in particular, collapse region, changes of the light absorption intensity of the PDA-L film were measured, simultaneously with the π-A curve measurement, on the water surface by fixing the wavelength at 242 nm. Although it was not possible to clearly distinguish by the π-A curve alone, the collapse region can be clearly discriminated from the steep change in the light absorption intensity according to Figs. 14 and 15. Checking the difference between point A and point C in Figs. 14 and 15, a perfect solid film state was recognized at point A, while a boundary region of solid film region and collapse region was recognized at point C. That is, the disturbance of the molecular arrangement occurring at point C in the PDA-L film seems to be the cause of slight photoreaction in spite of the high concentration region.

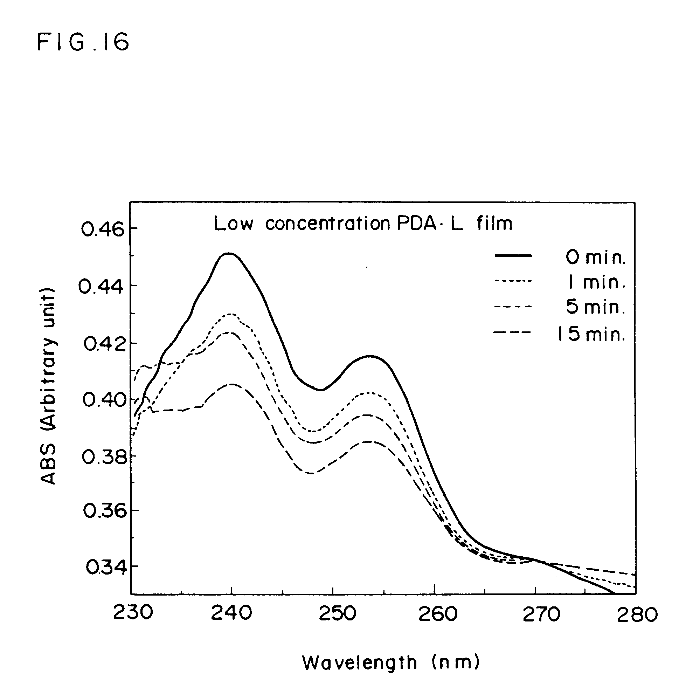

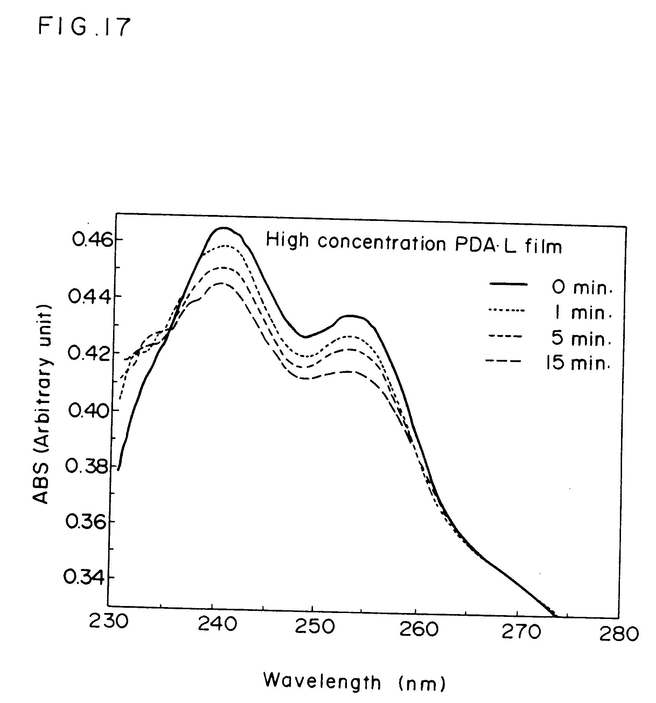

Moreover, in order to see whether the photoreactivity of the L film was maintained in the LB film, the photoreactivity of the PDA-LB film accumulated at typical points A, D was investigated. Fig. 16 shows the spectra changes due to UV irradiation of the low density PDA-LB film built-up at point D in Fig. 3, and Fig. 17 shows the spectra changes due to UV irradiation of PDA-LB film built-up at point A in Fig. 17. These absorptions also coincide with the action spectrum reported by B. Tieke et al. (op. cit.). Though slight changes are noted in Fig. 17, in Fig. 16 a sudden drop of absorption is observed in the first 1 minute. Therefore, as clear from comparison between Figs. 16 and 17, and Figs. 11 and 13, it is evident that the molecular arrangement and molecular density of the PDA-L film at the time of building-up are nearly maintained even in the PDA-LB film. Incidentally, in the high density PDA-LB film (Fig. 17), the photoreaction is somewhat promoted, which seems to be the result of disturbance in the arrangement at the time of building-up LB film.

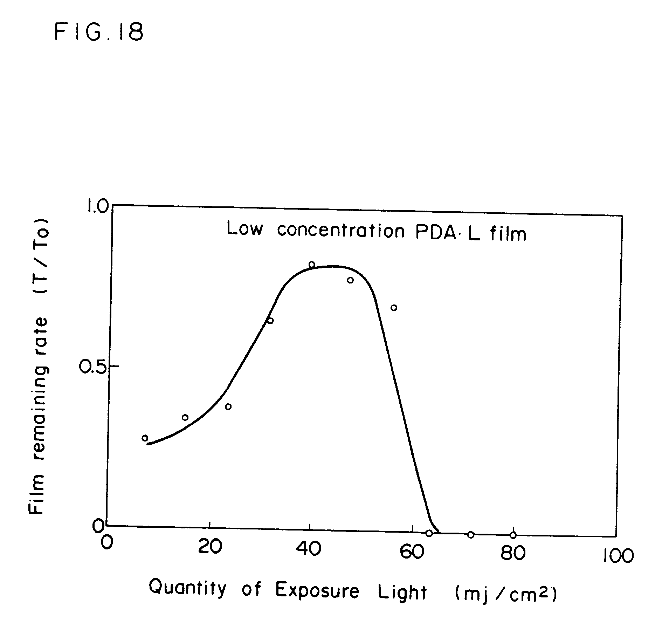

Furthermore, in the low density PDA-LB film, samples exposed to different quantities of light were dipped in ethanol, and were dissolved, and the normalized residual thickness of film was plotted, as shown in Fig. 18. This is the result of dipping in ethanol after irradiating the PDA-LB film of 50 layers with ultraviolet rays. The normalized residual thickness of the PDA-LB film built-up at point D increased at 40 to 50 mJ/cm², and decreased as the irradiation increased. It is hence predicted that the PDA-LB film of low molecular density is polymerized by ultraviolet irradiation, while the polymerized poly-PDA-film is photodecomposed. On the other hand, the PDA-LB film built-up at point A did not remain for all exposed samples. Therefore, in spite of irradiation with ultraviolet rays, almost no polymerization was noted.

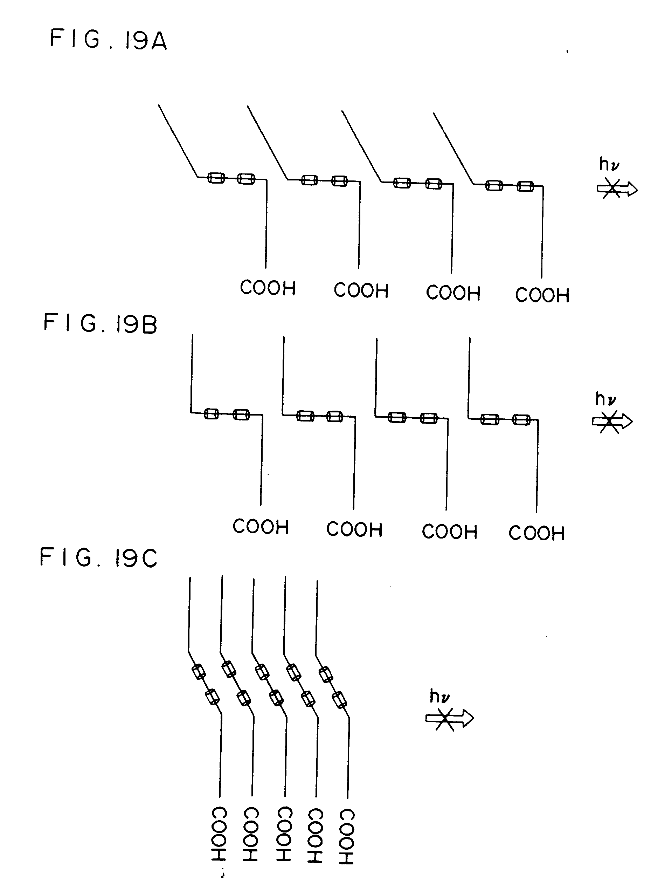

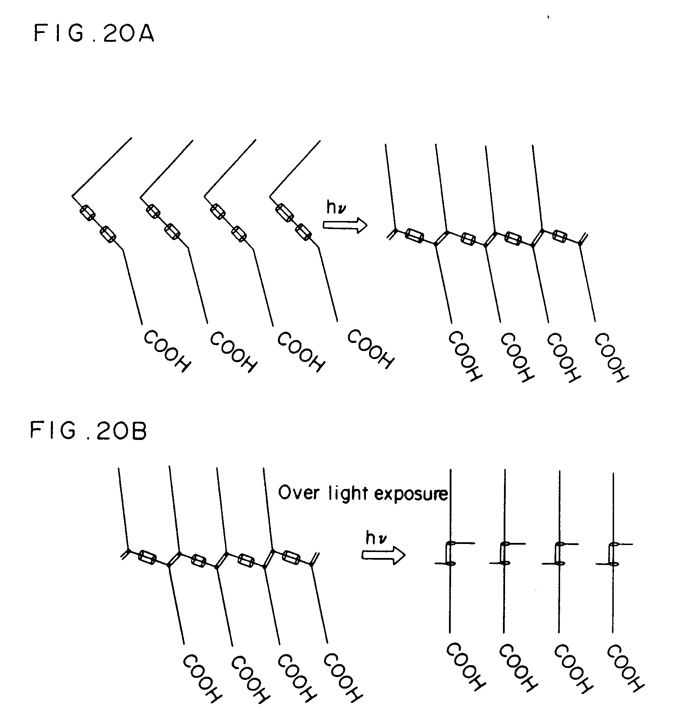

The above result proves that the PDA-L film produces polydiacetylene bond to polymerize, not in the photoreaction process as shown in Fig. 19A, B, and C, but in the reaction process as shown in Fig. 2, that is, at low molecular density. However, the polydiacetylene bond produced in the photopolymerization reaction process is not so active as in the polymerization process, but is unstable. This fact is further proved by the fact that the normalized residual thickness becomes zero by excessive light irradiation (Fig. 18). In other words, the polydiacetylene bond formed by polymerization is promoted in decomposition if irradiated with light after being polymerized. Photodecomposition of poly-PDA-L film and LB film is shown, but decomposition at the triple bond as shown in Fig. 20 may occur.

That is, the photoreaction of PDA-L film depends greatly on the molecular arrangement or density of PDA molecules. In the high density PDA-L film, the photoreactivity is low, while in the low density PDA-L film it has been confirmed that the photoreactivity is high. However, when the L film in low density state was irradiated with light, a very large reduction of molecule size was noted. These phenomena were similarly confirmed in the LB film.

Therefore, in the state of LB film, since the molecule weight reduces as the photopolymerization is promoted, and the polymerization is interrupted on the way, it is impossible to produce polydiacetylene of superhigh molecular weight. All these results indicate that photopolymerization is induced among PDA molecules by UV irradiation only when the molecular spacing of PDA molecules is kept at a proper distance, so that polydiacetylene bonds formed. It has been also confirmed that the polydiacetylene bond, once formed, is decomposed if irradiated excessively with light.

On the basis of the above results, one of the embodiments of this invention is described below. Using the trough IV (Fig. 1) used in the above experiment, PDA-L film was formed on the surface of aqueous solution whose condition was set at the salt concentration 2.6 x 10⁻⁴ and pH 5.6, where low density PDA-L film is formed. That is, an organic solvent containing PDA (chloroform) was spread and evaporated, and the PDA-L film remaining on the subphase was gathered by the barrier 7 in the direction of water surface. And then, photopolymerization was tried for about 5 minutes by using an ultraviolet lamp 8 of 0.05 mW-cm² while applying a surface pressure 20 (mN/m), thereby polydiacetylene of superhigh molecular weight having continuous conjugated bond and straight chain was prepared successfully by compensating for the reduction of molecule area at the time of photopolymerization, that is, preventing breakage of polymer due to the decrease of molecular area at the time of photopolymerization. At this time, the polymer obtained has the conductivity of scores siemens. It has been also confirmed that polydiacetylene having longer conjugate bond length will be obtained by applying a direct-current bias of scores of volts in the direction of the water surface when the diacetylene derivative molecules on the water surface gathered in the surface direction or when performing photopolymerization, because better molecular arrangement can be achieved. In this case, it is better to apply the electric field by attaching an electrode directly to the barrier, or it may be also possible to apply in the perpendicular to the barrier moving direction.

## Claims

1. A method of producing superlong conjugated polymer comprising the steps of:
spreading on an aqueous subphase a solution in an organic solvent of a substance having a diacetylene group, and evaporating said organic solvent;
gathering molecules of the substance having said diacetylene group remaining on the aqueous subphase by moving a barrier in a direction parallel to the surface of the aqueous subphase; and
polymerizing by light irradiation under a specified constant surface pressure.

2. A method according to claim 1, wherein polymerization is conducted by light irradiation while applying a direct-current electric field in a direction parallel to said surface of the aqueous subphase, under the specified surface pressure.

3. A method according to claim 1 or 2, wherein the aqueous subphase contains an inorganic salt.

4. A method according to claim 1,2 or 3, wherein the polymeric product is transferred onto a substrate.

## Patentansprüche

1. Verfahren zum Herstellen eines superlangen konjugierten Polymers, umfassend die Schritte:
Ausbreiten einer Lösung einer Substanz mit einer Diacetylengruppe in einem organischen Lösungsmittel auf einer wäßrigen Unterphase, und Verdampfen des organischen Lösungsmittels;
Sammeln von Molekülen der Substanz mit der Diacetylengruppe, die auf der wäßrigen Unterphase verbleiben, durch Bewegen einer Barriere in einer Richtung parallel zu der Oberfläche der wäßrigen Unterphase; und
Polymerisieren durch Lichtbestrahlung unter einem bestimmten konstanten Oberflächendruck.

2. Verfahren nach Anspruch 1, worin die Polymerisation durch Lichtbestrahlung unter dem bestimmten Oberflächendruck ausgeführt wird, während ein elektrisches Gleichstromfeld in einer Richtung parallel zu der Oberfläche der wäßrigen Unterphase angelegt wird.

3. Verfahren nach Anspruch 1 oder 2, worin die wäßrige Unterphase ein anorganisches Salz enthält.

4. Verfahren nach Anspruch 1, 2 oder 3, worin das polymere Produkt auf ein Substrat übertragen wird.

## Revendications

1. Procédé pour produire un polymère conjugué ultralong comprenant les étapes suivantes :
étalement sur une subphase aqueuse d'une solution dans un solvant organique d'une substance ayant un groupe diacétylène et évaporation dudit solvant organique ;
rassemblement des molécules de la substance ayant ledit groupe diacétylène restant sur la subphase aqueuse par déplacement d'une barrière parallèlement à la surface de la subphase aqueuse ; et
polymérisation par exposition à la lumière sous une tension superficielle constante spécifiée.

2. Procédé selon la revendication 1, dans lequel la polymérisation est effectuée par exposition à la lumière tout en appliquant un champ électrique en courant continu parallèlement à ladite surface de la subphase aqueuse sous la tension superficielle spécifiée.

3. Procédé selon la revendication 1 ou 2, dans lequel la subphase aqueuse contient un sel inorganique.

4. Procédé selon la revendication 1, 2 ou 3, dans lequel le produit polymère est transféré sur un substrat.
